# EUROPEAN PATENT APPLICATION

(11) **EP 4 674 557 A1**
(43) Date of publication of application: **07.01.2026**
(21) Application number: 24763897.6
(22) Date of filing: 27.02.2024
(51) Int. Cl.: B23K 20/04, B21B 1/38, C22C 21/00, C22F 1/00, C22F 1/04

(54) **CLADDING SLAB FOR ROLLING, METHOD FOR MANUFACTURING CLADDING SLAB FOR ROLLING, AND METHOD FOR MANUFACTURING CLADDING MATERIAL**

(30) Priority: 28.02.2023 JP 2023029109
(71) Applicant: UACJ Corporation, Chiyoda-ku Tokyo 100-0004 (JP)
(72) Inventor: TOYAMA, Morito, Tokyo 100-0004 (JP); FUNATO, Yasushi, Tokyo 100-0004 (JP); OKADA, Toshiya, Tokyo 100-0004 (JP); FUKUCHI, Akira, Tokyo 100-0004 (JP)
(74) Representative: Gulde & Partner
(86) International application number: PCT/JP2024/006997
(87) International publication number: WO 2024/181418

(57) **Abstract**

A clad slab for rolling 30 that is to be processed with rolling to be a cladding material 100 includes metal plates 10, 20 that are made of different materials and overlapped and joined together. The metal plates 10, 20 are joined with diffusion bonding at an interface. The metal plates 10, 20 that are joined have an edge surface 30B having a single bulge shape.

## Description

### TECHNICAL FIELD

The present technology relates to a clad slab for rolling, a method of producing a clad slab for rolling, and a method of producing a cladding material.

### BACKGROUND ART

There has been known a cladding material obtained by overlapping two or more kinds of metal materials and joined them with diffusion bonding at an interface. A cladding material is a metal material whose function is improved by joining a joint material (a skin) to a base material (a core material) and one example of a producing method of producing the cladding material is described in Patent Document 1. Patent Document 1 discloses a method of producing a clad steel plate in which a base material of iron and inevitable impurities and a joint material of stainless steel or a nickel alloy are overlapped and the overlapped one is welded to obtain a clad slab, and thereafter the clad slab is processed with hot rolling to produce a clad steel plate. Patent Document 1 discloses overlapping two clad slabs such that the joint materials face each other and welding an outer periphery of an overlapped one to obtain a sandwiched clad slab to suppress warping that is caused due to difference between the coefficient of linear expansion of the base material and the coefficient of linear expansion of the joint material.

### PRIOR ART DOCUMENT

### Patent Document

Patent Document 1: Japanese Unexamined Patent Application Publication No. 04-075791

### SUMMARY OF THE INVENTION

### Problem to be Solved by the Invention

However, in the producing method described in Patent Document 1, since the two clad slabs are welded with multi layers, cracks (separation) are likely to be caused in the rolling process, which is to be performed later, and joining properties of the interface are likely to be lowered. If one clad slab is obtained with welding and the joint material has a same thickness as the base material, separation is likely to be caused in the rolling process and the joining properties are likely to be lowered. Patent Document 1 proposes a method in which disposing a spacer including a component same as that of the base material and welding the base material and the spacer; however, with such a method, a process of forming the clad slab becomes complicated.

The present technology was made in view of the above circumstances. An object is to improve joining properties of a cladding material easily.

### Means for Solving the Problem

A clad slab for rolling according to the present technology is to be processed with rolling to be a cladding material. The clad slab for rolling includes metal plates that are made of different materials and overlapped and joined together. The metal plates are joined with diffusion bonding at an interface. The metal plates that are joined have an edge surface having a single bulge shape.

In the clad slab for rolling having the above configuration, at least one of the metal plates may be made of metal material including aluminum as a main component.

A method of producing a clad slab for rolling according to the present technology includes overlapping metal plates made of different materials such that plate surfaces are contacted, and performing hot rolling with heating the metal plates that are overlapped at a temperature lower than melting points of all the metal plates and joining the metal plates with applying pressure along a plate thickness direction. In the performing hot rolling, edge surfaces of the metal plates that are overlapped are not pressed along the plate surface direction.

In the method of producing a clad slab for rolling having the above features, at least one of the metal plates may be made of metal material including aluminum as a main component.

In the method of producing a clad slab for rolling having the above features, the metal plates may have a substantially same thickness before performing the hot rolling.

A method of producing a cladding material according to the present technology includes producing a clad slab for rolling with the above-described method of producing a clad slab for rolling, and rolling the clad slab for rolling to be elongated along a plate surface direction of the metal plates.

In the method of producing a cladding material having the above features, in the rolling, the clad slab for rolling may be heated at a temperature lower than melting points of all the metal plates.

### Effects of the Invention

According to the present technology, joining properties of a cladding material are improved easily.

### BRIEF DESCRIPTION OF THE DRAWINGS

[FIG. 1] a perspective view illustrating a preparation process of a method of producing a clad slab for rolling according to a first embodiment
[FIG. 2] a side view illustrating a joining process
[FIG. 3] a side view of the clad slab for rolling
[FIG. 4] a side view illustrating a rolling process
[FIG. 5] a table illustrating a table illustrating materials of a first metal plate and a second metal plate of Comparative Experiment 1
[FIG. 6] a table illustrating a table illustrating a size of the first metal plate and the second metal plate and evaluation results of Comparative Experiment 1
[FIG. 7] a perspective view of a clad slab for rolling according to Example 1
[FIG. 8] a perspective view of a clad material according to Example 1
[FIG. 9] a perspective view of a clad slab for rolling according to Comparative Example 1
[FIG. 10] a perspective view of a cladding material according to Example 1
[FIG. 11] a table illustrating chemical components of 2000 series aluminum alloys, 3000 series aluminum alloys, 4000 series aluminum alloys
[FIG. 12] a table illustrating chemical components of 5000 series aluminum alloys
[FIG. 13] a table illustrating chemical components of 6000 series aluminum alloys, 7000 series aluminum alloys

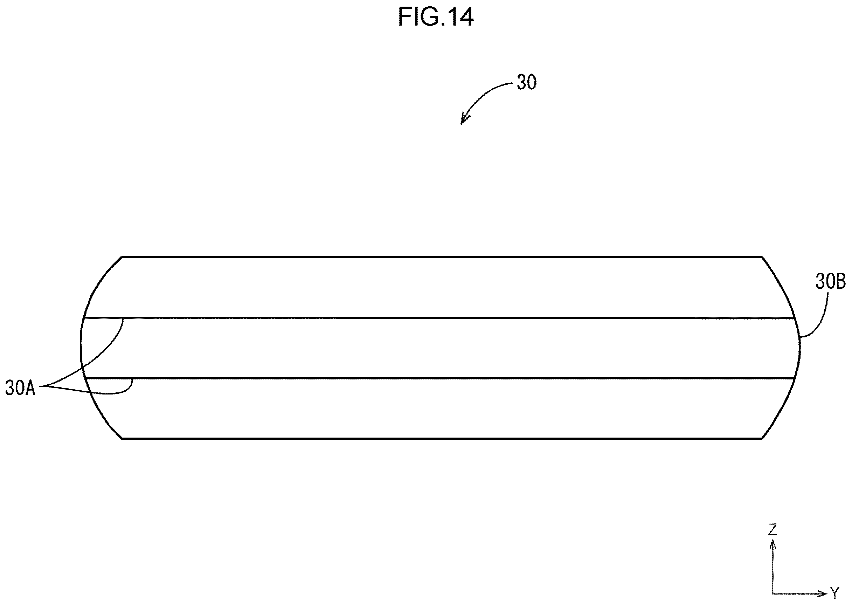

[FIG. 14] a side view of a clad slab for rolling according to other embodiment

### MODES FOR CARRYING OUT THE INVENTION

### <First Embodiment>

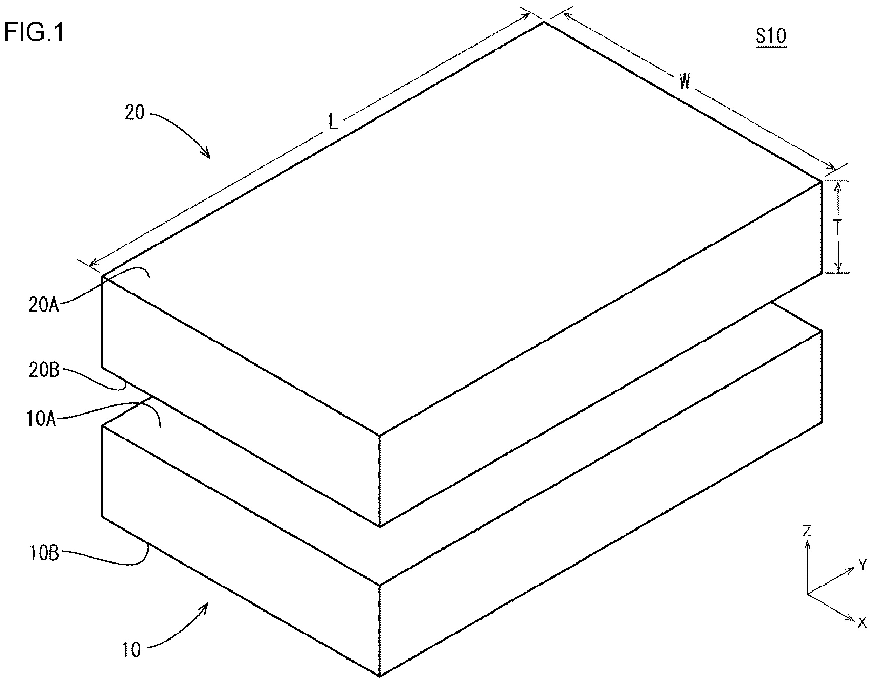

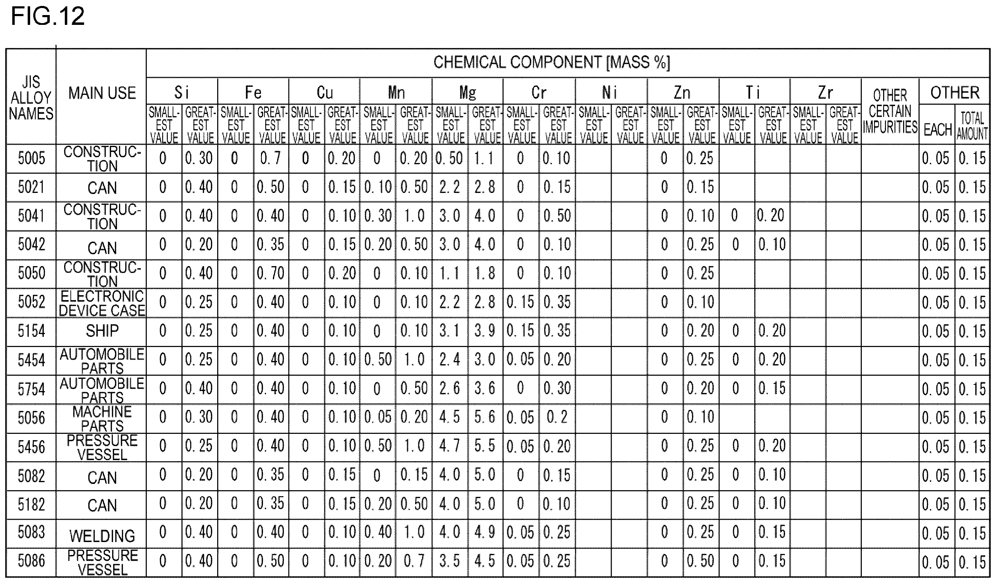

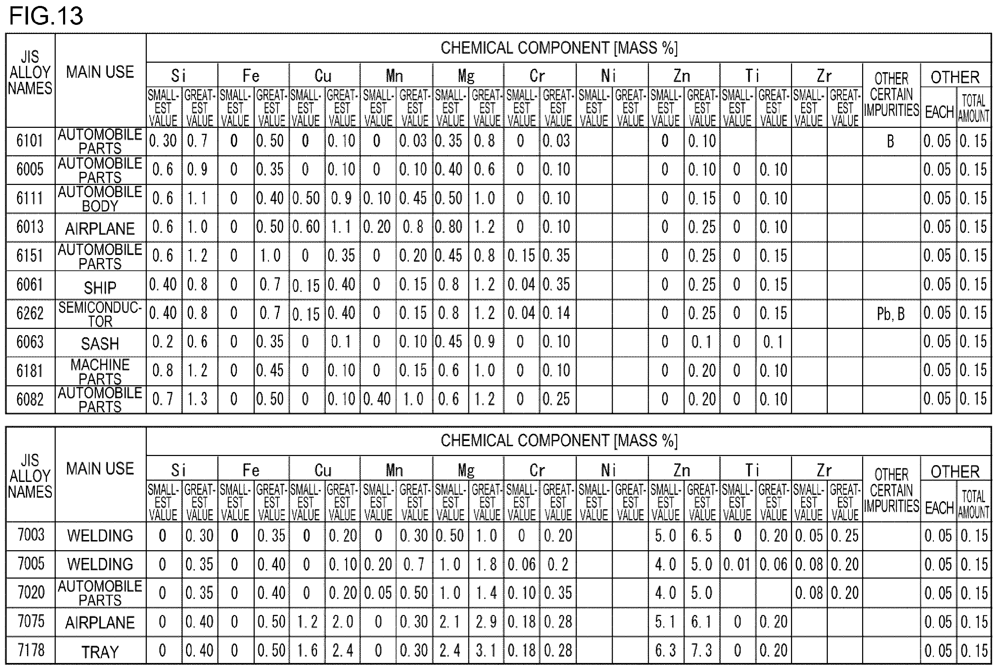

A method of producing a clad slab for rolling 30 and a method of producing a cladding material 100 with using the clad slab for rolling 30 according to a first embodiment will be described with reference to FIGS. 1 to 13. An X-axis, a Y-axis, and a Z-axis may be present in some of the drawings and each of the axial directions represents a direction represented in each drawing. A Z-axis direction corresponds to an upper-bottom direction; however, the above directions are illustrated as examples and should not be interpreted limitedly.

The clad slab for rolling 30 is a slab (ingot) that is to be rolled and processed to be the cladding material 100. In this embodiment section, the clad slab for rolling 30 that includes two metal materials (a first metal plate 10 and a second metal plate 20) and the cladding material 100 formed by rolling the clad slab are described as examples; however, the number of the metal material is not limited to two as long as multiple metal materials are used.

The cladding material 100 is a metal material that is obtained by overlapping two or more metal materials of different materials and joining the metal materials with diffusion bonding at an interface. The cladding material 100 is obtained by joining a joint material (a skin material) to a base material (a core material) and is a high performance metal material having improved functions of corrosion resistance, strength, and heat transfer. The cladding material 100 is used for various kinds of uses.

The method of producing the clad slab for rolling 30 includes a preparation process S10 of overlapping the first metal plate 10 and the second metal plate 20 and a joining process S20 (forge welding process) of joining the first metal plate 10 and the second metal plate 20, which are overlapped, with hot pressure welding. The method of producing the cladding material 100 at least includes a rolling process S30 of rolling the clad slab for rolling 30 to be formed in a thin plate. After the rolling process S30, a process of dividing the rolled cladding material 100 or rolling the rolled cladding material 100 in a coil may be performed. Hereinafter, the preparation process S10, the joining process S20, and the rolling process S30 will be described in detail.

In the preparation process S10, as illustrated in FIG. 1, the first metal plate 10 and the second metal plate 20 are overlapped such that plate surfaces are contacted. More specifically, the second metal plate 20 is disposed on one plate surface 10A (an upper plate surface) of the first metal plate 10 such that the upper plate surface 10A of the first metal plate 10 and one plate surface 20B (a lower plate surface) of the second metal plate 20 are overlapped and contacted.

The first metal plate 10 and the second metal plate 20 have a rectangular plate shape with a plate thickness direction corresponding to the Z-axis direction, a long side direction corresponding to the Y-axis direction, and a short-side direction corresponding to the X-axis direction. The plan view shape of the first metal plate 10 and the second metal plate 20 may be any shapes other than the rectangular shape but may preferably have a substantially same plan view shape and a substantially same size. With such a configuration, edge surfaces (side surfaces) of the first metal plate 10 and the second metal plate 20 that are overlapped are on a substantially same plane in a plan view. The plate thicknesses of the first metal plate 10 and the second metal plate 20 may be different or may be substantially same.

The materials of the first metal plate 10 and the second metal plate 20 may not limited as long as they are metal material including different chemical components. For instance, two kinds of aluminum alloys having different aluminum purities may be used for the first metal plate 10 and the second metal plate 20. With high purity aluminum being used as a material for the first metal plate 10 and low purity aluminum that includes relatively large amount of elements other than aluminum being used as a material for the second metal plate 20, the cladding material 100 achieves a low cost with the first metal plate 10 and exerts the characteristics of the second metal plate 20.

For instance, with two kinds of aluminum alloys including different contents of an additional element being used as the materials of the first metal plate 10 and the second metal plate 20, the cladding material 100 having the function (mechanical characteristics, corrosion resistance, and conductivity) based on the content of the additional element included in the second metal plate 20 with respect to the first metal plate 10 is obtained.

More specifically, the content of additional elements (elements other than aluminum) in the second metal plate 20 may differ from the content of additional elements in the first metal plate 10. For instance, in the group of elements including Ag, Au, Co, Cr, Cu, Fe, Mg, Mn, Mo, Sc, Si, Sn, Zn, Ti, Ni, Zr, Li, Be, Bi, Pb, and B, the content of one kind or two or more kinds of the elements may differ between the second metal plate 20 and the first metal plate 10. The content of the additional elements in the second metal plate 20 may be greater or smaller than that in the first metal plate 10.

The content of the additional element that affects alumite coating in the second metal plate 20 may differ from the content of the additional element in the first metal plate 10. One kind or two or more kinds of elements in the element group including Ag, Au, Co, Cu, Fe, Mo, and Sn are used as the additional element affecting alumite coating. The phrase of "affecting alumite coating" may mean that formation of an oxide film differs when an aluminum alloy is subjected to alumite coating or change in corrosion, hardness, insulation, or coloring, for instance, differs when an aluminum alloy is subjected to alumite coating. Regarding the change in coloring, for instance, when a certain aluminum alloy is subjected to alumite coating with oxalic acid bath to form an oxide film having a thickness of 25 µm, the aluminum alloy that contains Mg of 5.0 mass % and Mn of 0.5 mass % exhibits brownish yellow with being subjected to the alumite coating and the aluminum alloy that contains Cu of 4.0 mass %, Mg of 0.6 mass %, and Mn of 0.5 mass % exhibits bluish white with being subjected to the alumite coating. Other additional elements affecting alumite coating include Mg, Cr, Ti.

The content of the additional element that affects mechanical characteristics in the second metal plate 20 may differ from the content of the additional element in the first metal plate 10. One kind or two or more kinds of elements in the element group including Cu, Mg, Mn, Si, Cr, Fe, Ni, Zr, and Zn are used as the additional element affecting mechanical characteristics. The mechanical characteristics (including mechanical characteristics in a relatively high temperature atmosphere) may be one or two or more characteristics in a group including delay, strength, machinability, moldability (including bendability), abrasion resistance, fatigue resistance, fracture toughness, shock resistance, hardness, Young's modulus, and tensile strength. For instance, with Cu being added to an aluminum alloy, strength and machinability are increased, with Mn being added to an aluminum alloy, strength, corrosion resistance, and moldability are increased, with Si being added to an aluminum alloy, abrasion resistance and heat resistance are increased, with Mg being added to an aluminum alloy, moldability, weldability, and halotolerance are increased, with Mg and Si being added to an aluminum alloy, strength and corrosion resistance are increased, and with Zn and Mg being added to an aluminum alloy, strength is increased. For instance, with Cu, Pb, Sn, and Bi being added to an aluminum alloy, machinability is increased. The elements affecting mechanical characteristics may be elements that contribute to modification of a matrix (an average particle diameter or a shape) or may be elements for distributing second phase particles.

The content of the additional element that affects tensile strength in the second metal plate 20 may differ from the content of the additional element in the first metal plate 10. One kind or two or more kinds of elements in the element group including Cu, Mg, Mn, Si, Zn, Sc, and Fe are used as the additional element affecting tensile strength. With at least one of Mn, Mg, and Fe being included in an aluminum alloy, tensile strength is increased due to solid solution hardening or precipitation hardening. With at least one of Cu, Si, Zn, and Sc being included in an aluminum alloy, tensile strength is increased due to precipitation hardening.

The content of the additional element that affects a melting point in the second metal plate 20 may differ from the content of the additional element in the first metal plate 10. An example of the additional elements affecting a melting point is Si. For instance, the second metal plate 20 may be 4000 series aluminum alloys whose melting point is adjusted by including Si and the first metal plate 10 may be an aluminum alloy of series other than 4000 series.

The content of the additional element that affects a crystal form in the second metal plate 20 may differ from the content of the additional element in the first metal plate 10. One kind or two or more kinds of elements in the element group including Cr, Mn, Sc, and Zr are used as the additional element affecting a crystal form. Since aluminum alloys are polycrystalline, examples of a crystal form include an average particle diameter and a shape of each crystal. A polycrystal of an aluminum alloy is elongated in a rolling process, which will be described later, and becomes a form of fibers; however, if a polycrystal of an aluminum alloy is heated with intermediate annealing, the form of fibers tries to recover the original shape of crystals (recrystallization). At this time, polycrystals of an aluminum alloy try to keep the form of fibers and this effect is called pinning effect. For instance, if the content of Cu in an aluminum alloy is large, the pinning effect is accelerated and recrystallization is suppressed (aluminum alloy is more likely to keep the form of fibers). If the content of Cu in an aluminum alloy is small, the pinning effect is suppressed and recrystallization is accelerated (aluminum alloy is less likely to keep the form of fibers). Therefore, the additional elements affecting a crystal form may be elements that affect acceleration of the pinning effect or suppressing of recrystallization. The additional elements may be elements that affect a crystal form of base material of an aluminum alloy.

The content of the additional element that affects corrosion resistance in the second metal plate 20 may differ from the content of the additional element in the first metal plate 10. One kind or two or more kinds of elements in the element group including Cu, Mn, Si, and Zn are used as the additional element affecting corrosion resistance. By adjusting the amount of the additional elements, a potential difference is created between the first metal plate 10 and the second metal plate 20 and one of the first metal plate 10 and the second metal plate 20 is protected from corrosion with sacrificial protection.

The content of the additional element that affects conductivity in the second metal plate 20 may differ from the content of the additional element in the first metal plate 10. One kind or two or more kinds of elements in the element group including Cu, Mg, Mn, Fe, Si, and Zn are used as the additional element affecting conductivity. As the content of such an additional element is increased, the conductivity of an aluminum alloy decreases. Particularly, Mn, Mg, and Si decreases conductivity much more than Cu, Zn, and Fe. For instance, with the content of Mn in the second metal plate 20 being greater than that in the first metal plate 10, the conductivity of the second metal plate 20 is lower than that of the first metal plate 10.

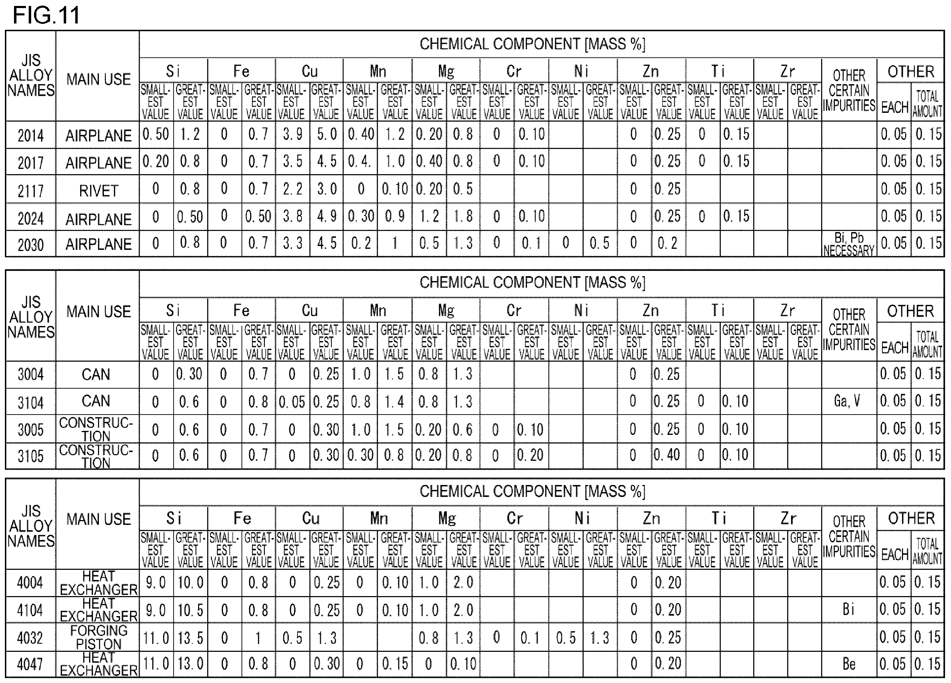

As illustrated in FIGS. 11 to 13, any one of groups of the following aluminum alloys may be used as the material of the first metal plate 10 and the second metal plate 20. Such aluminum alloys include 2000 series aluminum alloys such as JIS 2014, 2017, 2117, 2024, 2030, 3000 series aluminum alloys such as JIS 3004, 3104, 3005, 3105, 4000 series aluminum alloys such as JIS 4004, 4104, 4032, 4047, 5000 series aluminum alloys such as JIS 5005, 5021, 5041, 5042, 5050, 5052, 5154, 5454, 5754, 5056, 5456, 5082, 5182, 5083, 5086, 6000 series aluminum alloys such as JIS 6101, 6005, 6111, 6013, 6151, 6061, 6262, 6063, 6181, 6082, and 7000 series aluminum alloys such as JIS 7003, 7005, 7020, 7075, 7178. Further, 1000 series aluminum alloys such as JIS 1050, JIS 1070, JIS 1085, JIS 1100, JIS 1230, JIS 1200 and 8000 series aluminum alloys such as JIS 8021, JIS 8079 may be used as the material of the first metal plate 10 and the second metal plate 20.

An aluminum alloy material of a certain chemical component is casted continuously and an ingot is formed, for instance, and homogenization is performed as necessary. Then, the ingot is subjected to hot rolling and the first metal plate 10 and the second metal plate 20 are formed. At least one of the upper plate surface 10A of the first metal plate 10 and the lower plate surface 20B of the second metal plate 20 that are contacted is preferably machined to have minute protrusions and recesses. However, the process of producing the first metal plate 10 and the second metal plate 20 itself is not necessarily included in the method of producing the clad slab for rolling 30. The preparation process S10 may be performed with using the first metal plate 10 and the second metal plate 20 that are already produced.

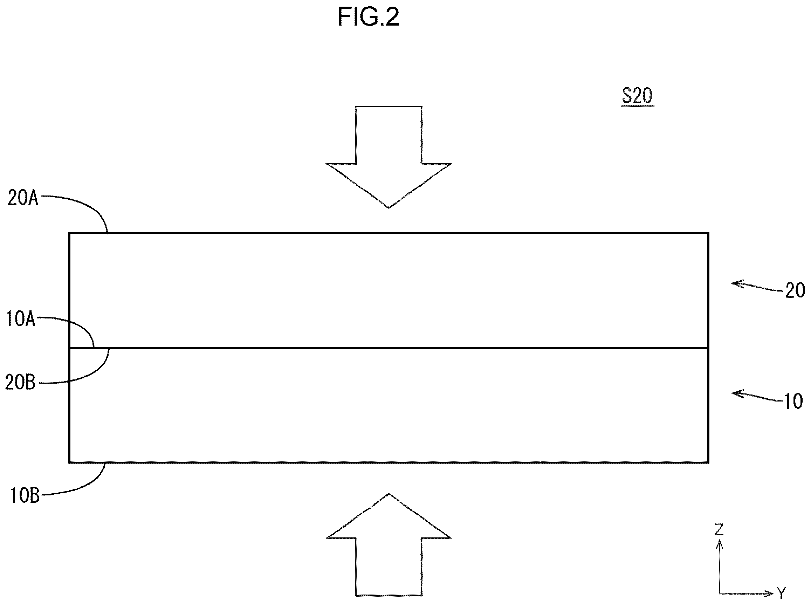

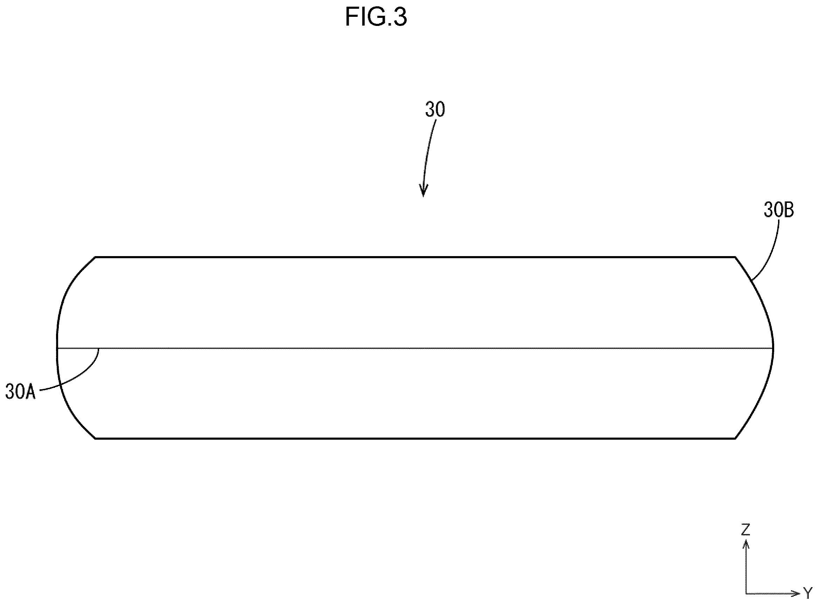

In the joining process S20, as illustrated in FIG. 2, the first metal plate 10 and the second metal plate 20 that are overlapped in the preparation process S10 are joined with hot pressure welding and the clad slab for rolling 30 illustrated in FIG. 3 is formed. A heating temperature in the hot pressure welding is lower than the melting point of the material of the first metal plate 10 and the second metal plate 20. For instance, with an aluminum alloy is used for the first metal plate 10 and the second metal plate 20, the heating temperature may be 250 degrees or higher and 500 degrees or lower, or may be 300 degrees or higher and 450 degrees or lower, or may be 350 degrees or higher and 420 degrees or lower.

By performing hot pressure welding at a temperature lower than the melting point, the upper plate surface 10A of the first metal plate 10 and the lower plate surface 20B of the second metal plate 20 that are contacted are joined with diffusion bonding (metal joining) without melting the surfaces. Accordingly, the structure of the interface 30A of the clad slab for rolling 30 is less likely to be irregular or a third additional layer is not formed at the interface 30A by melting.

In the joining process S20, a pressing (pressing down) direction in the hot rolling corresponds to the plate thickness direction (the Z-axis direction) of the first metal plate 10 and the second metal plate 20 and the metal plates are not pressed in a plate surface direction (a X-Y surface direction). More specifically, as illustrated with outlined arrows in FIG. 2, with a pressing device, another plate surface (a lower plate surface) 10B of the first metal plate 10 is pressed upward (toward the second metal plate 20) along the plate thickness direction and another plate surface (an upper plate surface) 20A of the second metal plate 20 is pressed downward (toward the first metal plate 10) along the plate thickness direction. With such pressing, middle portions of edge surfaces (side surfaces) 30B of the clad slab for rolling 30 with respect to the plate thickness direction are projected and thus, the edge surfaces 30B are deformed into a single bulge shape. With a single bulge shape, the edge surface 30B has one projecting portion. With a double bulge shape, the edge surface 30B has two projecting portions.

With the edge surfaces 30B of the clad slab for rolling 30 having a single bulge shape, the joined metal plates 10, 20 are less likely to be separated when the clad slab for rolling 30 is rolled to form the cladding material 100 in the rolling process S30, which is to be subsequently performed. Therefore, joining properties are improved. Furthermore, the edge surfaces 30B of the clad slab for rolling 30 is less likely to be deformed to have a double bulge shape and a so-called burr is less likely to be caused. Therefore, defective products are less likely to be produced. Furthermore, unlike Patent Document 1, an additional member such as a spacer and the welding process are not necessary to form the single bulge shape on the edge surfaces 30B. Therefore, the joining properties of the cladding material 100 are easily improved.

The pressure in the hot pressure welding of the joining process S20 is a pressure such that at least one of the first metal plate 10 and the second metal plate 20 can be plastically deformed (a pressure higher than deformation resistance in hot rolling). An oxide film on at least one of the upper plate surface 10A of the first metal plate 10 and the lower plate surface 20B of the second metal plate 20 that are contacted is broken (torn) due to plastic deformation and a new surface is exposed. With the new surface being contacted with an opposing plate surface (the upper plate surface 10A of the first metal plate 10 or the lower plate surface 20B of the second metal plate 20), the upper plate surface 10A of the first metal plate 10 and the lower plate surface 20B of the second metal plate 20 can be joined with diffusion bonding. As previously described, at least one of the upper plate surface 10A of the first metal plate 10 and the lower plate surface 20B of the second metal plate 20 preferably has minute protrusions and recesses. With the surface having the minute protrusions and recesses being contacted with the opposing plate surface with pressure, breakage of the oxide film and exposure of new surfaces are accelerated. As a result, the joining properties are further improved.

With the hot pressure welding being performed in the joining process S20, the first metal plate 10 and the second metal plate 20 can be more likely to be plastically deformed compared to performing cold pressure welding (normal temperature pressure welding). Accordingly, breakage of the oxide film and exposure of new surfaces are accelerated and the joining properties are likely to be improved. Particularly, when the first metal plate 10 and the second metal plate 20 that are relatively thick or have a substantially same plate thickness are processed with cold pressure welding, the plastic deformation of the first metal plate 10 and the second metal plate 20 is insufficient and the joining properties are likely to be lowered. In the joining process S20 of this embodiment, with performing hot pressure welding, the joining properties can be easily improved even with the conditions of plate thickness that are likely to lower the joining properties.

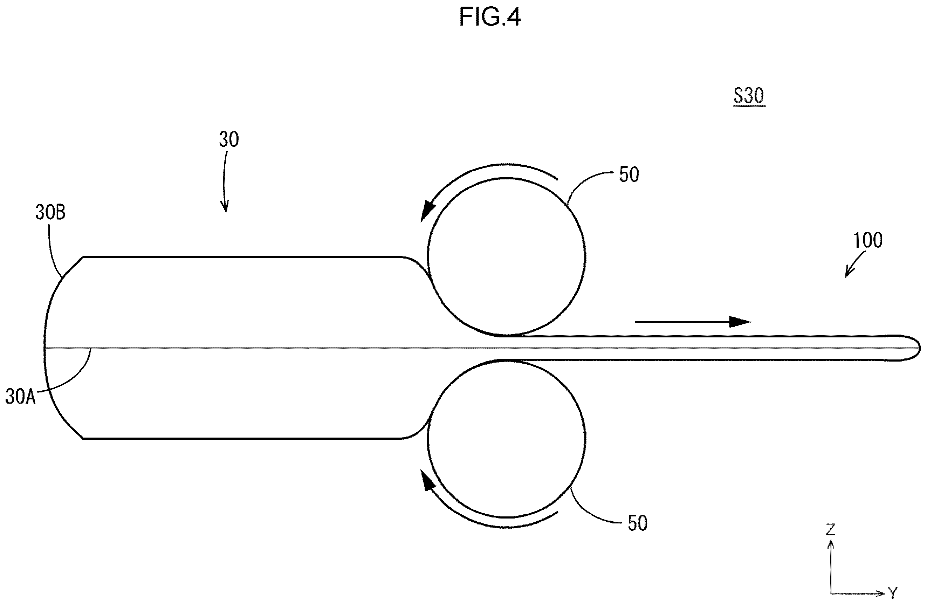

In the rolling process S30, the clad slab for rolling 30 is rolled to be formed in a rolled plate shape and the cladding material 100 is formed. A specific method performed in the rolling process S30 is selected as appropriate according to a material that is used, and hot rolling, cold rolling, or combination of hot rolling and cold rolling can be used. In hot rolling and cold rolling, as illustrated in FIG. 4, an upper surface and a lower surface of the clad slab for rolling 30 are pressed in the plate thickness direction (the Z-axis direction) with a pair of rolling rollers 50, 50 being rotated. Accordingly, the clad slab for rolling 30 is elongated in a longitudinal direction (the Y-axis direction) out of plate surface directions and formed to be the cladding material 100 of a thin plate shape.

With an aluminum alloy being used for the first metal plate 10 and the second metal plate 20, in the rolling process S30, the method similar to the known method may be used depending on the kind of an aluminum alloy used in the process. For instance, with the JIS 1000 series aluminum alloy being used, the method described in Japanese Unexamined Patent Application Publication No. 2017-172034 may be used. With the JIS 2000 series aluminum alloy being used, the method described in Japanese Unexamined Patent Application Publication No. 2013-116474 or Japanese Unexamined Patent Application Publication No. 2010-159488 may be used. With the JIS 3000 series aluminum alloy being used, the method described in Japanese Patent No. 6912886, Japanese Unexamined Patent Application Publication No. 2020-33632, Japanese Patent No. 6667189, WO 2019/058935, WO 2019/066049, or Japanese Unexamined Patent Application Publication No. 2018-3074 may be used. With the JIS 4000 series aluminum alloy being used, the method described in Japanese Patent No. 6649889, Japanese Patent No. 5698416, Japanese Patent No. 5602747, Japanese Unexamined Patent Application Publication No. 2013-116473, Japanese Patent No. 5261214, Japanese Patent No. 4636520, or Japanese Patent No. 3982849 may be used. With the JIS 5000 series aluminum alloy being used, the method described in Japanese Patent No. 6961395, Japanese Patent No. 5944862, Japanese Unexamined Patent Application Publication No. 2013-12362, Japanese Unexamined Patent Application Publication No. 2009-148823, Japanese Unexamined Patent Application Publication No. 2009-209426, or Japanese Unexamined Patent Application Publication No. 8-85880 may be used. With the JIS 6000 series aluminum alloy being used, the method described in Japanese Unexamined Patent Application Publication No. 2019-026876, Japanese Unexamined Patent Application Publication No. 2019-056163, Japanese Unexamined Patent Application Publication No. 2019-173118, Japanese Unexamined Patent Application Publication No. 2020-503428, WO 2018/003709, WO 2018/012597, WO 2019/021899, Japanese Patent No. 6452384, Japanese Patent No. 6467154, Japanese Patent No. 6512963, Japanese Patent No. 6581347, or Japanese Patent No. 6585435 may be used. With the JIS 7000 series aluminum alloy being used, the method described in WO 2021/070900, Japanese Patent No. 6979991, Japanese Patent No. 5431795, Japanese Patent No. 5276341, Japanese Patent No. 4669903, Japanese Patent No. 4736048, or Japanese Unexamined Patent Application Publication No. 2010-159489 may be used. With the JIS 8000 series aluminum alloy being used, the method described in Japanese Unexamined Patent Application Publication No. 2016-41831 may be used. With different series of aluminum alloys being used for the first metal plate 10 and the second metal plate 20 (for instance, a 2000 series aluminum alloy is used for the first metal plate 10 and a 3000 series aluminum alloy is used for the second metal plate 20), middle values of the production conditions such as a temperature and pressure in the preparation process and the rolling process (a middle value of the production condition for a 2000 series aluminum alloy and the production condition for a 3000 series aluminum alloy) may be used.

### <Comparative Experiment 1>

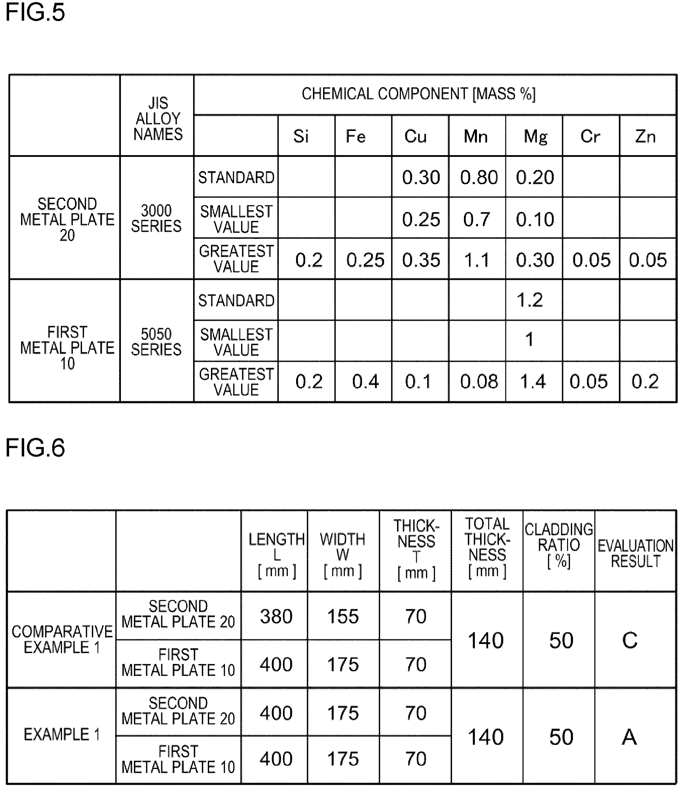

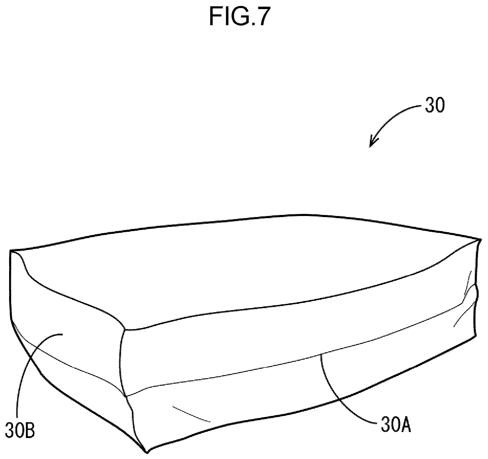

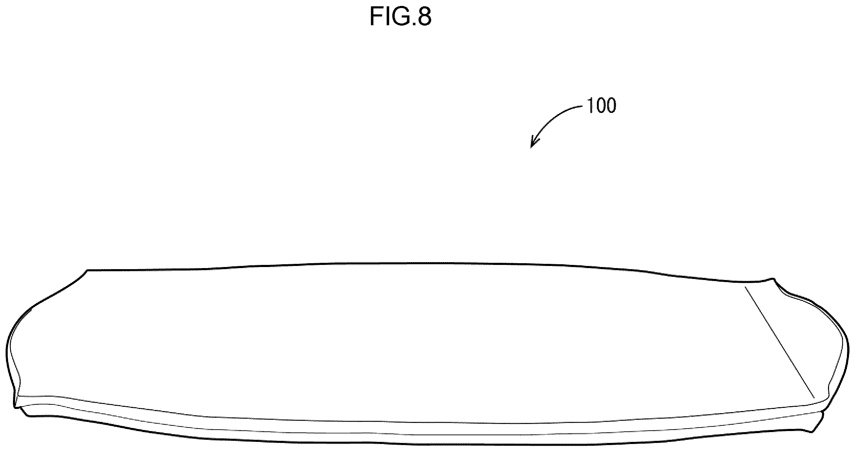

To evaluate the cladding material 100 formed with the above-described producing method, evaluation samples of Example 1 and Comparative Example 1 were produced with using the first metal plates 10 and the second metal plates 20 illustrated in FIGS. 5 and 6 and Comparative Experiment 1 was performed. The evaluation samples of Example 1 are the clad slab for rolling 30 (FIG. 7) and the cladding material 100 (FIG. 8) produced with the producing method of this embodiment. In the rolling process S30, the clad slab for rolling 30 was heated at the rate of temperature increase of 50°C/h and maintained at 510°C for one hour and processed with hot rolling with the pair of rolling rollers 50, 50. When the rolling rollers 50 move from one end to the other end of the clad slab for rolling 30 along the elongated direction (the Y-axis direction), movement of the rolling rollers 50 is counted as one path and multiple paths were performed repeatedly.

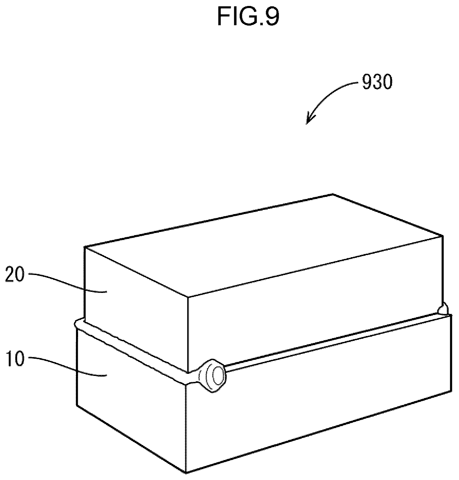

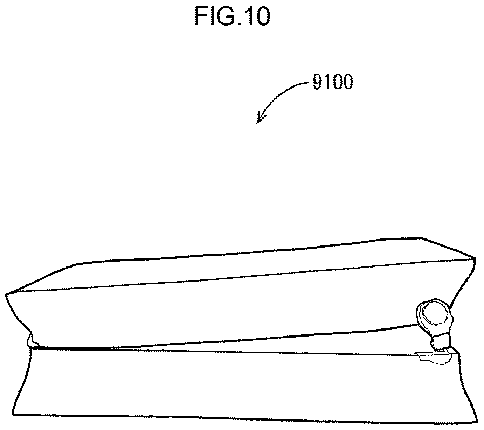

The evaluation sample of Comparative Example 1 was processed with the preparation process S10 and the rolling process S30 similar to Example 1; however, the joining process S20 (the hot pressure welding) was not performed and the welding process was performed after the preparation process S10. A clad slab for rolling 930 (FIG. 9) and a cladding material 9100 (FIG. 10) that were produced through the above processes are the evaluation samples of Comparative Example 1. In the welding process, outer periphery portions of the contact plate surface (the upper plate surface 10A of the first metal plate 10 or the lower plate surface 20B of the second metal plate 20) of the first metal plate 10 and the second metal plate 20 that are overlapped were welded. Each of welded portions has a welding length ranging from about 10 mm to 150 mm. As illustrated in FIG. 6, a planar size of the second metal plate 20 of Comparative Example 1 is slightly smaller than that of Example 1 because of the matter of welding. Other conditions such as the thickness of the first metal plate 10 and the second metal plate 20 are same in Comparative Example 1 and Example 1.

### <Evaluation Method>

Interface joining conditions of the cladding material 100 of Example 1 and the cladding material 9100 of Comparative Example 1 were evaluated by visual check. If the joining is insufficient and separation occurs or other deficiencies (such as burrs) are caused, the evaluation was C (failed) and if the joining is sufficient and no deficiencies is caused, the evaluation was A (good).

### <Evaluation Result>

It was confirmed that the edge surfaces 30B of the clad slab for rolling 30 of Example 1 had a single bulge shape (FIG. 7). The cladding material 100 of Example 1 was elongated such that a total thickness is 30 mm with keeping good joining properties by performing eight paths of rolling in the rolling process S30 (FIG. 8) and the evaluation was A. On the other hand, with respect to the cladding material 9100 of Comparative Example 1, the metal plates were separated at the joint portion after the rolling process S30 (FIG. 10) and the evaluation was C.

### <Other Embodiments>

The present technology is not limited to the embodiments described above with reference to the drawings. For example, the following embodiments may be included in the technical scope of the present invention.
(1) According to the producing method of the above embodiment, the edge surfaces 30B can be formed to have a single bulge shape with the number of metal members of the clad slab for rolling 30 being three or more (two or more interfaces).

### EXPLANATION OF SYMBOLS

10...first metal plate, 20...second metal plate, 30...clad slab for rolling, 30B...edge surface, 100...cladding material

## Claims

1. A clad slab for rolling that is to be processed with rolling to be a cladding material, wherein
the clad slab for rolling includes metal plates that are made of different materials and overlapped and joined together,
the metal plates are joined with diffusion bonding at an interface, and
the metal plates that are joined have an edge surface having a single bulge shape.

2. The clad slab for rolling according to claim 1, wherein at least one of the metal plates is made of metal material including aluminum as a main component.

3. A method of producing a clad slab for rolling comprising:
overlapping metal plates made of different materials such that plate surfaces are contacted; and
performing hot rolling with heating the metal plates that are overlapped at a temperature lower than melting points of all the metal plates and joining the metal plates with applying pressure along a plate thickness direction, wherein
in the performing hot rolling, edge surfaces of the metal plates that are overlapped are not pressed along the plate surface direction.

4. The method of producing a clad slab for rolling according to claim 3, wherein at least one of the metal plates is made of metal material including aluminum as a main component.

5. The method of producing a clad slab for rolling according to claim 3 or claim 4, wherein the metal plates have a substantially same thickness before performing the hot rolling.

6. A method of producing a cladding material comprising:
producing a clad slab for rolling with the method according to claim 3 or claim 4; and
rolling the clad slab for rolling to be elongated along a plate surface direction of the metal plates.

7. The method of producing a cladding material according to claim 6, wherein in the rolling, the clad slab for rolling is heated at a temperature lower than melting points of all the metal plates.
